# FASCICULE DE BREVET EUROPEEN

(11) **EP 4 390 214 B1**
(45) Date de publication et mention de la délivrance du brevet: **11.11.2026**
(21) Numéro de dépôt: 23217383.1
(22) Date de dépôt: 16.12.2023
(51) Int. Cl.: F21S 10/00, F21S 6/00, F21V 14/02, F21V 33/00, G09B 27/08, F21Y 115/10

(54) **LAMPE COMPRENANT UN GLOBE À DEUX HÉMISPHÈRES LUMINEUX SÉPARÉS PAR UN DISQUE MÉDIAN COMMANDÉ EN ROTATION PAR UN MOTEUR DISPOSÉ À L'INTÉRIEUR DU GLOBE**
LAMPE BESTEHEND AUS EINEM GLOBUS MIT ZWEI LEUCHTENDEN HALBKUGELN, DIE DURCH EINE ZENTRALE SCHEIBE GETRENNT SIND, DEREN DREHUNG DURCH EINEN IM INNEREN DES GLOBUS BEFINDLICHEN MOTOR GESTEUERT WIRD
LAMP COMPRISING A GLOBE WITH TWO LUMINOUS HEMISPHERES SEPARATED BY A CENTRAL DISC CONTROLLED IN ROTATION BY A MOTOR PLACED INSIDE THE GLOBE

(30) Priorité: 19.12.2022 FR 2213887
(43) Date de publication de la demande: 26.06.2024
(73) Titulaire: Charruyer, Vincent, 86100 Châtellerault (FR)
(72) Inventeur: Charruyer, Vincent, 86100 Châtellerault (FR)
(74) Mandataire: Gaglione, Renaud

(56) Documents cités:
- CN-Y- 2 297 767
- CN-Y- 2 798 225
- DE-A1- 2 118 451
- DE-C- 641 263
- DE-U1- 9 109 161

## Description

L'invention se rapporte à une lampe comprenant un globe, relié à un pied par des moyens de liaison s'étendant suivant une direction diamétrale du globe, un disque médian, mobile à l'intérieur du globe autour d'un axe de rotation, perpendiculaire à la direction diamétrale des moyens de liaison, un support, s'étendant à l'intérieur du globe et portant l'axe de rotation du disque médian, des moyens d'éclairage, portés sur une face ou sur une face et une face opposée du disque médian et un moyen d'entraînement du disque médian, commandé en rotation par un moteur porté par le support.

Une lampe de ce type est connue du document DE 91 09 161 U. Selon ce document, pour lequel le support est fixe par rapport au pied, le moyen d'entraînement comprend un disque secondaire, commandé en rotation par l'arbre d'un moteur, perpendiculairement à l'axe de rotation du disque médian. Le disque secondaire est pourvu d'un doigt décentré et engagé dans la lumière du support de l'axe de rotation du disque médian, pour convertir un tour du disque secondaire en une oscillation du disque médian autour d'une position moyenne.

Dans le document CN 206564096 U, un disque médian sépare le globe en deux hémisphères, que les moyens d'éclairage permettent de distinguer l'un de l'autre en fonction de leur luminosité. La rotation du disque médian permet de plus de déplacer les deux hémisphères lumineux relativement au globe. Ainsi, des motifs formés sur le globe sont différemment éclairés de l'intérieur, en fonction de la position du disque médian. Dans une application de globe terrestre, le globe est également mobile en rotation autour de la direction diamétrale des moyens de liaison. La double rotation du globe terrestre et du disque médian permet ainsi à la lampe de simuler l'alternance des phases diurne et nocturne de la Terre, tout au long de l'année.

Dans le document GB 717293, un écran séparant un globe terrestre en deux hémisphères de luminosité différente, est mobile autour d'un axe de rotation formant un angle aigu, non perpendiculaire, avec la direction diamétrale des moyens de liaison reliant le globe à un pied de lampe. En l'occurrence, les moyens de liaison représentent l'axe Nord-Sud de la Terre tandis que l'axe de rotation de l'écran représente l'axe vertical passant par le centre de l'astre. L'écran est de forme parabolique et est entraîné en rotation par un moyen d'entraînement par engrenage, mobile autour d'un axe de rotation parallèle à l'axe Nord-Sud, en étant commandé manuellement en rotation par une molette fixée à une partie du support qui s'étend à l'extérieur du globe.

Dans le document FR 2 390 788, un écran est là encore, mobile à l'intérieur d'un globe terrestre, autour d'un axe de rotation représentant l'axe vertical passant par le centre de la Terre, tandis que la direction diamétrale des moyens de liaison reliant le globe à un pied de lampe, représente l'axe Nord-Sud de l'astre. L'écran est également de forme parabolique et est entraîné en rotation par un moyen d'entraînement par engrenage, mobile autour d'un axe de rotation parallèle à l'axe vertical passant par le centre de la Terre, en étant commandé en rotation par un moteur, fixé à une partie du support qui s'étend à l'extérieur du globe.

De cet art antérieur, il ressort que la commande en rotation du disque médian est dépendante de l'angle entre la direction diamétrale des moyens de liaison et l'axe de rotation du disque médian. Les deux derniers documents cités précédemment - GB 717293 et FR 2 390 788 - divulguent un report de la commande, à l'extérieur du globe dans le cas où l'angle est aigu. Dans le cas où l'axe de rotation du disque médian est perpendiculaire à la direction diamétrale des moyens de liaison, le document CN 206564096 U ne donne pas d'indication particulière au sujet du moyen d'entraînement, tandis que le document DE 91 09 161 U divulgue un moyen d'entraînement commandé en rotation, perpendiculairement à l'axe de rotation du disque médian.

Une lampe appartenant au type rappelé précédemment est encore connue du document DE 641 263 C. Selon ce document, le moyen d'entraînement est un moyen par engrenage, mobile autour d'un axe de rotation parallèle à l'axe de rotation du disque médian. Le document CN 2 798 225 Y en divulgue un autre exemple.

L'un des buts de l'invention est ainsi de modifier une lampe d'un type conforme au document DE 641 263 C, sous le rapport de la commande en rotation du disque médian.

A cet effet, l'invention a pour objet, une lampe comprenant un globe, relié à un pied par des moyens de liaison s'étendant suivant une direction diamétrale du globe, un disque médian, mobile à l'intérieur du globe autour d'un axe de rotation, perpendiculaire à la direction diamétrale des moyens de liaison, un support, s'étendant à l'intérieur du globe et portant l'axe de rotation du disque médian, des moyens d'éclairage, portés sur une face ou sur une face et une face opposée du disque médian et un moyen d'entraînement du disque médian, commandé en rotation par un moteur porté par le support, le moyen d'entraînement étant un moyen par engrenage, mobile autour d'un axe de rotation parallèle à l'axe de rotation du disque médian, caractérisée en ce qu'elle comprend un secteur de roue dentée ou une roue dentée, fixé de façon coaxiale au disque médian, mobile autour de son axe de rotation et en prise par engrenage avec le moyen d'entraînement, mobile autour de son axe rotation.

Cet agencement permet de simplifier la conception et la fabrication, à la fois du globe et du pied de lampe.

Dans un mode particulier d'exécution de l'invention, l'axe de rotation du moyen d'entraînement et le moteur sont portés par une partie du support, opposée à une partie, portant l'axe de rotation du disque médian et dont un décrochement permet de loger le moteur dans un logement, fermé par une plaque fixée au pied.

Dans un autre mode particulier d'exécution de l'invention, l'axe de rotation du moyen d'entraînement du disque médian et le moteur sont portés par un levier, articulé au support autour d'un axe de rotation parallèle à l'axe de rotation du disque médian.

Dans un autre mode particulier d'exécution de l'invention, l'axe de rotation du moyen d'entraînement et le moteur ainsi que l'axe de rotation du disque médian sont portés par deux bras d'une partie du support conformée en fourche.

Dans un autre mode particulier d'exécution de l'invention, l'axe de rotation du moyen d'entraînement et le moteur ainsi que l'axe de rotation du disque médians sont portés par un deuxième bras du support, fixé à un premier bras du support, désaxé par rapport à la direction diamétrale.

Dans un autre mode particulier d'exécution de l'invention, le disque médian comprend deux demi-disques lenticulaires convexes entre lesquels le support s'étend en portant l'axe de rotation du moyen d'entraînement et le moteur ainsi que l'axe de rotation du disque médian. De préférence, les moyens de liaison et le support sont fixes l'un par rapport à l'autre et mobiles en rotation par rapport au pied, autour de la direction diamétrale.

Dans l'un ou l'autre mode particulier d'exécution de l'invention, un secteur de roue dentée ou une roue dentée, fixé de façon coaxiale au disque médian, est en prise par engrenage avec le moyen d'entraînement commandé en rotation par le moteur.

D'autres avantages de l'invention sont décrits dans l'exposé ci-dessous illustré par les dessins suivants :
[Fig. 1] est une vue de face d'une lampe selon un premier mode d'exécution.
[Fig. 2] est une vue de profil de la lampe selon le premier mode d'exécution.
[Fig. 3] montre un premier détail de la vue de face selon le premier mode d'exécution.
[Fig. 4] montre un deuxième détail de la vue de face selon le premier mode d'exécution.
[Fig. 5] est une vue de face d'une lampe selon un deuxième mode d'exécution.
[Fig. 6] est une vue de profil de la lampe selon le deuxième mode d'exécution.
[Fig. 7] est une vue de face d'une lampe selon un troisième mode d'exécution.
[Fig. 8] est une vue de profil de la lampe selon le troisième mode d'exécution.
[Fig. 9] est une vue de face d'une lampe selon un quatrième mode d'exécution.
[Fig. 10] est une vue de profil de la lampe selon le quatrième mode d'exécution.
[Fig. 11] est une vue de profil d'une lampe selon un cinquième mode d'exécution.
[Fig. 12] est une vue de face de la lampe selon le cinquième mode d'exécution.
[Fig. 13] montre la lampe selon l'un quelconque des modes d'exécution, le globe étant partagé en deux hémisphères de teinte différente tandis que le disque médian est parallèle au plan de séparation des deux hémisphères.
[Fig. 14] montre la lampe selon l'un quelconque du premier au troisième mode d'exécution, le globe étant partagé en deux hémisphères de teinte différente tandis que le disque médian est perpendiculaire au plan de séparation des deux hémisphères.
[Fig. 15] est une vue de profil de la lampe selon une application particulière de l'invention.

L'invention est décrite à l'aide des cinq modes d'exécution mentionnés précédemment. Un élément commun à ces modes est désigné par la même référence.

Une lampe selon l'un quelconque des modes d'exécution comprend un globe 1, relié à un pied 3 par des moyens de liaison 5 s'étendant suivant une direction diamétrale D du globe 1. Un disque médian 7 est mobile à l'intérieur du globe 1 autour d'un axe de rotation A1, perpendiculaire à la direction diamétrale D des moyens de liaison 5. Un support 9 s'étend à l'intérieur du globe 1 et porte l'axe de rotation A1 du disque médian 7. Des moyens d'éclairage 11 sont portés sur une face ou sur une face et une face opposée du disque médian 7. Un moyen 13 d'entraînement du disque médian 7 est commandé en rotation par un moteur 15 porté par le support 9.

Selon l'invention, le moyen 13 d'entraînement du disque médian 7 est un moyen par engrenage, mobile autour d'un axe de rotation A2 parallèle à l'axe de rotation A1 du disque médian 7.

Le globe 1 résulte d'un assemblage de deux demi-globes.

Dans les quatre premiers modes d'exécution, les moyens de liaison 5 comprennent deux tubes cylindriques 5a, 5b, reliés au pied 3 et définissant la direction diamétrale D du globe 1. Une plaque 29, fixée au pied 3 par un troisième tube cylindrique 6, coaxial aux deux tubes précédents, est logée à l'intérieur du globe 1 pour servir de fixation au support 9. A noter que la plaque 29 et le tube cylindrique 6 peuvent être une seule et même pièce.

Les moyens d'éclairage 11 sont reliés à une source d'alimentation 21, disposée dans le pied 3, par des câbles électriques 23, fixés sur une face ou sur une face et la face opposée du disque médian 7 et logés dans un perçage axial 20 du moyeu 19, un perçage 22 du support 9 et les tubes cylindriques 5a, 5b des moyens de liaison. L'éclairage biface du disque médian 7 permet d'illuminer le globe 1 en deux hémisphères de luminosité différente, de part et d'autre du disque médian 7.

Des câbles électriques 25 relient le moteur 15 à la source d'alimentation 21 en étant logés dans les tubes cylindriques indiqué précédemment.

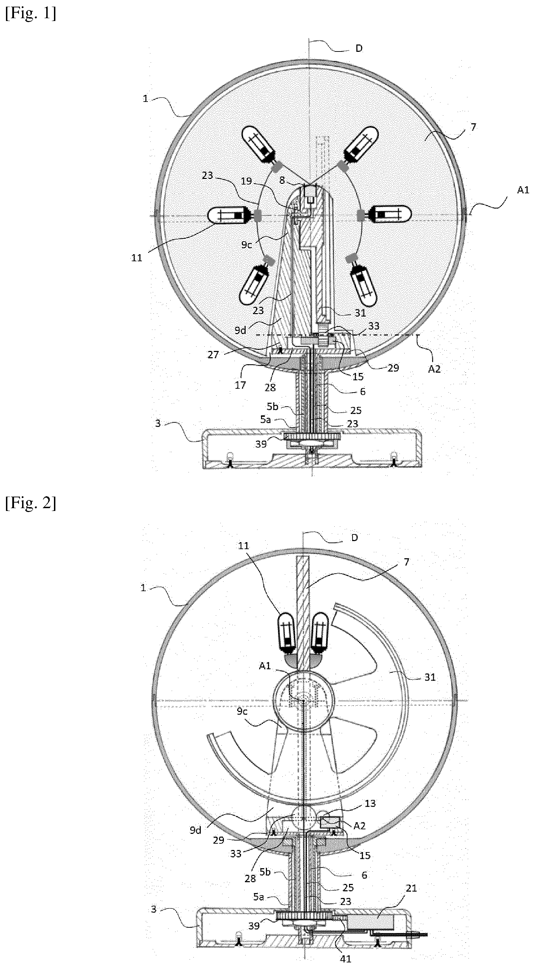

Dans le premier mode d'exécution, Fig. 1 et Fig. 2, l'axe de rotation A2 du moyen d'entraînement 13 et le moteur 15 sont portés par une partie 9d du support 9, opposée à une partie 9c portant l'axe de rotation A1 du disque médian 7 et dont un décrochement 27 permet de loger le moteur 15 dans un logement 28 fermé par la plaque 29 fixée au pied 3. Autrement dit, le moteur 15 est logé dans un décrochement 27 du support 9, fermé par la plaque de fixation 29. Il commande en rotation le moyen 13 d'entraînement du disque médian 7, qui en l'occurrence est une roue dentée, en prise d'engrenage avec un secteur de roue dentée 31, fixé au moyeu 19 du disque médian 7. La prise d'engrenage peut être directe ou indirecte, mettant en œuvre un engrenage intermédiaire 33. La distance qui sépare l'axe de rotation A1 du disque médian 7, de l'axe de rotation A2 du moyen 13 d'entraînement, est avantageusement mise à profit pour obtenir un rapport élevé de démultiplication entre le moyen 13 d'entraînement et le secteur de roue dentée 31, correspondant au rapport des rayons de ces deux éléments engrenés l'un dans l'autre.

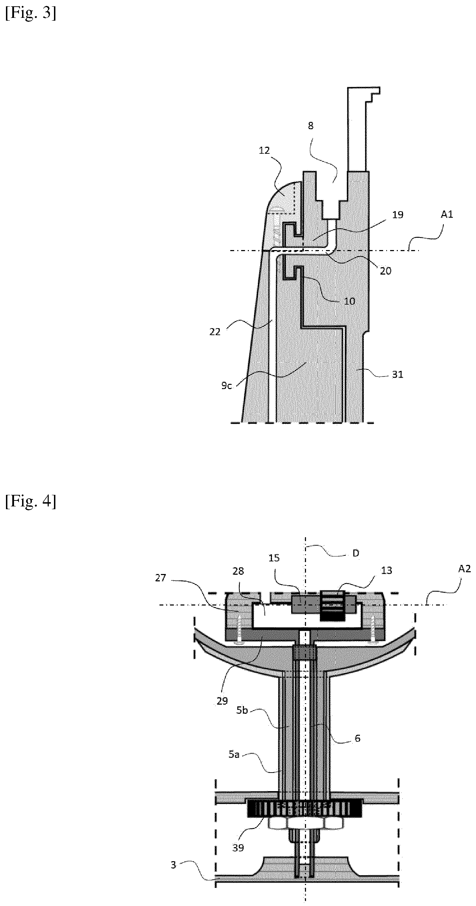

Le disque médian 7, Fig. 3 et Fig. 4, est fixé à un moyeu 19 par l'intermédiaire d'une encoche de fixation 8. Le support 9 reçoit le moyeu 19, définissant l'axe de rotation A1, dans un logement 10, fermé par une bague 12 vissée dans le support 9.

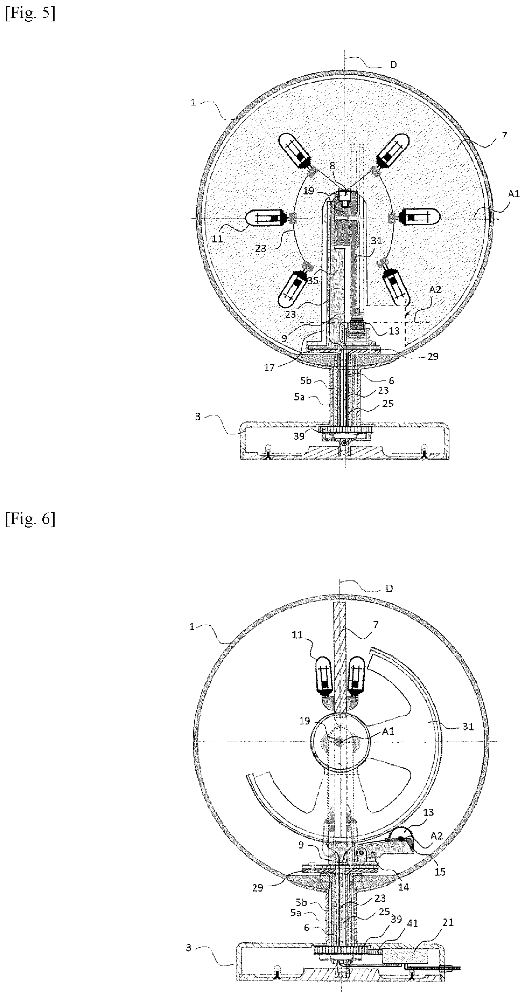

Le deuxième mode d'exécution, Fig. 5 et Fig. 6, se distingue du précédent en ce que l'axe de rotation A2 du moyen 13 d'entraînement du disque médian 7 et le moteur 15 sont portés par un levier 16, articulé au support 9 autour d'un axe de rotation A3, parallèle à l'axe de rotation A1 du disque médian 7. Un ressort 14 assure la prise d'engrenage entre le moyen 13 d'entraînement et le secteur de roue dentée 31. Le levier 16 permet de déporter l'axe de rotation A2 du moyen 13 d'entraînement par rapport à la direction diamétrale D des moyens de liaison 5a, 5b en vue d'augmenter l'amplitude de la rotation du secteur de roue dentée 31.

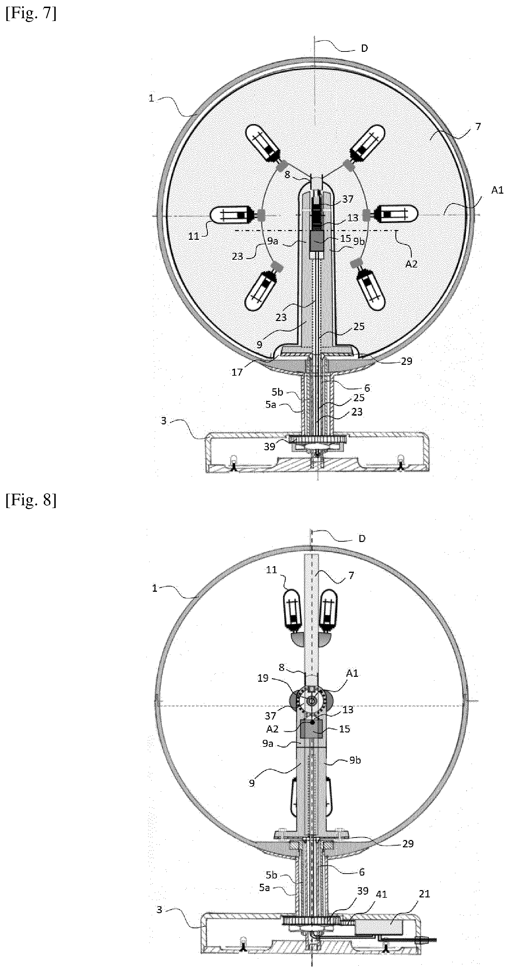

Le troisième mode d'exécution, Fig. 7 et Fig. 8, se distingue des deux modes précédents en ce que l'axe de rotation A2 du moyen d'entraînement 13 et le moteur 15 ainsi que l'axe de rotation A1 du disque médian 7, sont portés par deux bras 9a, 9b d'une partie du support 9, conformée en fourche. Autrement dit, le moteur 15 est logé entre les deux bras 9a, 9b de la partie du support 9. La profondeur de la fourche permet de faire varier la distance qui sépare les axes de rotation A1 et A2, qui peut ainsi être avantageusement réduite pour diminuer le rapport de démultiplication, à proportion du rapport des rayons du moyen 13 d'entraînement du disque médian 7 et d'une roue dentée 37, fixée au moyeu 19 et engrenée avec le moyen 13 d'entraînement.

Dans les trois modes d'exécution précédents, le support 9 s'étend suivant la direction diamétrale D des moyens de liaison 5. Le disque médian 7 possède une échancrure 17 qui s'étend suivant une direction radiale, pour lui permettre d'être déplacé en rotation autour de l'axe de rotation A1, de part et d'autre du support 9.

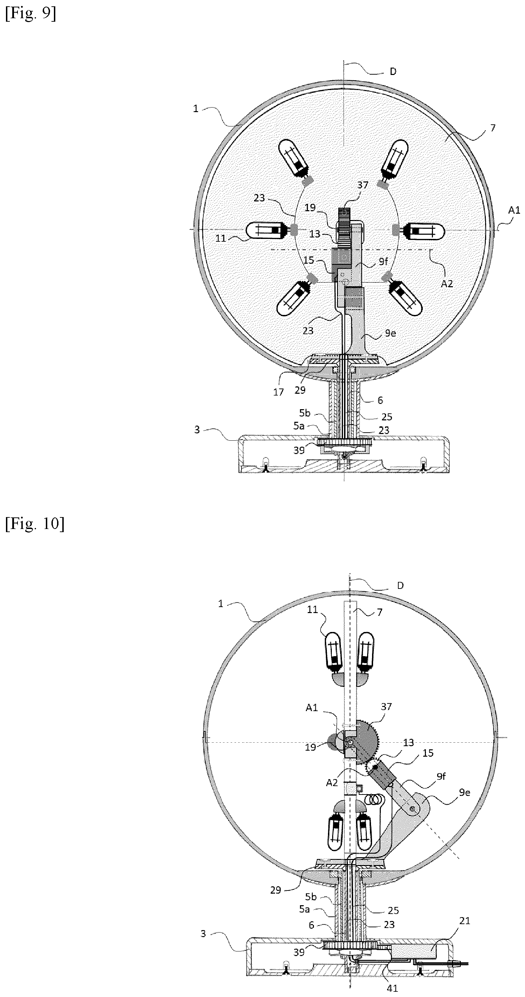

Le quatrième mode d'exécution, Fig. 9 et 10, se distingue des trois modes d'exécution précédents, en ce que l'axe de rotation A2 du moyen 13 d'entraînement et le moteur 15 ainsi que l'axe de rotation A1 du disque médian 7 sont portés par un deuxième bras 9f du support 9, fixé à un premier bras 9e dudit support 9, désaxé par rapport à la direction diamétrale D. Autrement dit, le support 9 comprend un premier bras 9e, désaxé par rapport à la direction diamétrale D et un deuxième bras 9f, fixé au premier bras 9e et portant le moyen 13 d'entraînement du disque médian 7 et le moteur 15. Le premier bras 9e est fixé à la plaque de fixation 29. Il est désaxé d'un angle typiquement égal à 45° par rapport à la direction diamétrale D. Le deuxième bras 9f est lui aussi désaxé d'un angle typiquement égal à -45°. Le moyen 13 d'entraînement du disque médian 7 est en prise d'engrenage avec une roue dentée 37 dont le moyeu 19 est porté par le deuxième bras 9f suivant l'axe de rotation A1.

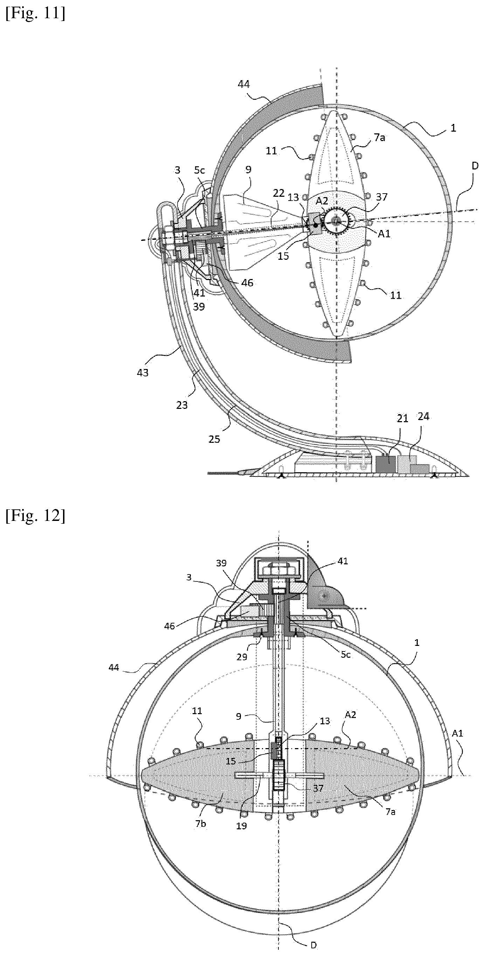

Le cinquième mode d'exécution, Fig. 11 et Fig. 12, se distingue des quatre modes d'exécution précédents, en ce que l'axe de rotation A2 du moyen d'entraînement 13 et le moteur 15 sont portés par une partie du support 9 qui porte également l'axe de rotation A1 du disque médian 7, lequel comprend deux demi-disques lenticulaires convexes 7a, 7b entre lesquels le support 9 s'étend. Dans ce mode d'exécution, les moyens de liaison 5 comprennent un tube cylindrique 5c, relié au pied 3 et définissant la direction diamétrale D du globe 1. Le tube cylindrique 5c sert de fixation au support 9. Les moyens d'éclairage 11 sont reliés à une source d'alimentation 21 par des câbles électriques 23. Des câbles électriques 25 relient le moteur 15 à cette même source d'alimentation 21.

Dans l'un quelconque des modes d'exécution, les moyens de liaison 5 sont mobiles en rotation par rapport au pied 3, autour de la direction diamétrale D, pour permettre la rotation du globe 1. La rotation est assurée par un engrenage de deux roues dentées 39, 41 dont l'une est commandée par un deuxième moteur, et l'autre est fixée aux moyens de liaison 5. Le deuxième moteur peut être logé dans la source d'alimentation 21 ou, référence 46, être autonome et alimenté par une source d'alimentation distincte 24.

Dans les quatre premiers modes d'exécution, le support 9 est fixe par rapport au pied 3 tandis que dans le cinquième mode, il est mobile en rotation autour de la direction diamétrale D, étant fixé par des vis 48 au tube cylindrique 5c des moyens de liaison 5.

A noter que l'axe de rotation A2 du moyen 13 d'entraînement du disque médian 7 est de préférence confondu avec l'arbre du moteur 15.

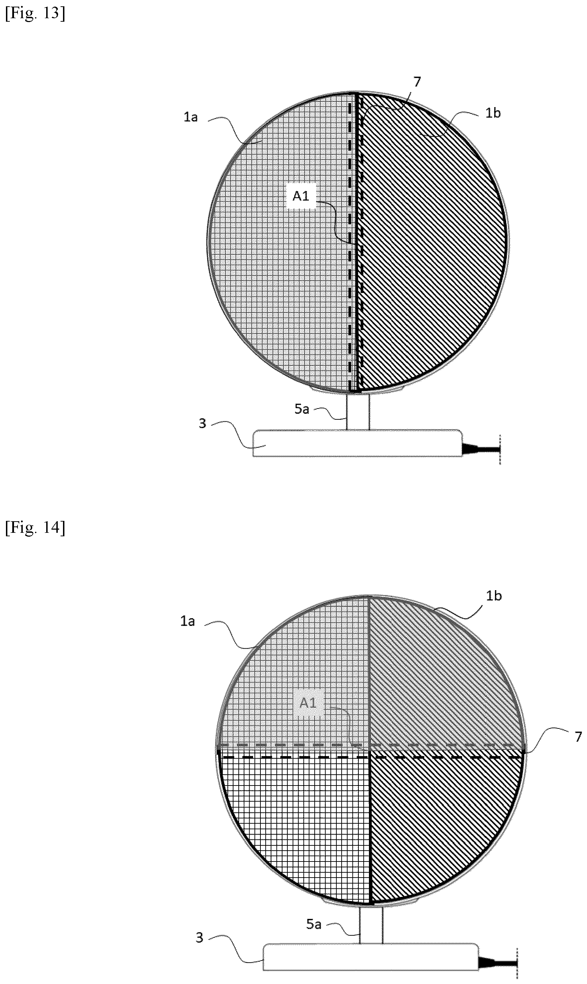

Le disque médian 7 et les moyens d'éclairage 11 permettent de partager le globe 1 en deux hémisphères de luminosité différente, qui se déplacent à l'intérieur du globe en fonction de la rotation du disque médian 7 autour de l'axe de rotation A1. Sur les figures 13 et 14, le globe 1 est teinté de deux teintes différentes sur deux demi-globes 1a, 1b dont le plan de séparation est défini par la direction diamétrale D et l'axe de rotation A1. Figure 13, le disque médian 7 s'étend dans le plan de séparation des deux demi-globes 1a, 1b qui ainsi coïncident avec les deux hémisphères de luminosité différente. Figure 14, le disque médian 7 s'étend perpendiculairement au plan de séparation des deux demi-globes 1a, 1b de sorte que les deux hémisphères de luminosité différente sont tournés de 90° autour de l'axe de rotation A1, par rapport aux deux demi-globes 1a, 1b. Dans cette deuxième configuration, le globe 1 offre quatre différentes températures de luminosité.

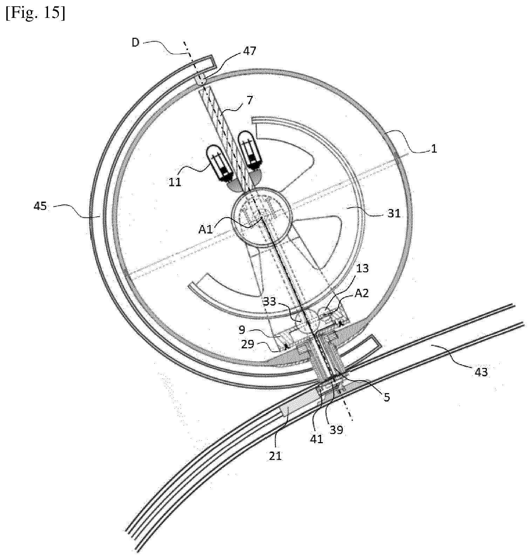

Une application particulière de l'invention tient dans la représentation du globe terrestre. Fig. 15, le pied 3 est intégré à une armature 43 qui permet d'incliner la direction diamétrale D des moyens de liaison 5a, 5b d'un angle représentant l'inclinaison de la Terre suivant la direction Nord - Sud. Un arceau 45 est fixé à l'armature 43 pour porter, à l'opposé des moyens de liaison 5a, 5b, un pivot 47 venant en prise avec le globe 1, suivant la direction diamétrale D. Le moteur qui est intégré à la source d'alimentation 21 et qui commande la rotation du globe 1 autour de la direction diamétrale D, est synchronisé avec le moteur 15 qui commande la rotation du disque médian 7 autour de l'axe de rotation A1, pour simuler la rotation journalière de la Terre autour de la direction Nord - Sud et le déplacement annuel de la face éclairée par le Soleil, pour l'hémisphère Nord comme pour l'hémisphère Sud.

Une autre application particulière de l'invention, Fig. 11 et 12, tient dans la représentation de la Lune. Le pied est fixé à une armature 43 tandis qu'un écran 44, de forme hémisphérique, est fixé au pied 3 et disposé de façon coaxiale avec le globe 1, suivant la direction diamétrale D des moyens de liaison 5. Cet écran sert à obturer un hémisphère du globe 1 et à rendre visible l'autre hémisphère. La rotation des moyens de liaison 5 autour de la direction diamétrale D permet d'orienter le globe 1, de façon telle à faire correspondre son hémisphère visible, avec la face de Lune qui est visible de la Terre, en fonction de la latitude terrestre du lieu où la lampe se trouve. Ce réglage d'orientation s'obtient en actionnant le moteur 46 qui commande la rotation des moyens de liaison 5 et le support 9. Dans une position d'orientation donnée, le moteur 15 qui commande, via le moyen d'entraînement 13, la rotation du disque médian 7 autour de l'axe de rotation A1, est programmée pour simuler le cycle lunaire, sur la croissance et la décroissance lumineuse pour la durée d'un mois lunaire. Dans l'hémisphère visible du globe 1, tel qu'il est délimité par l'écran hémisphérique 44, les croissants de lune sont déterminés par la différence d'intensité des moyens d'éclairage 11, d'une face du disque médian 7 par rapport à l'autre.

## Revendications

1. Lampe comprenant un globe (1), relié à un pied (3) par des moyens de liaison (5) s'étendant suivant une direction diamétrale (D) du globe (1), un disque médian (7), mobile à l'intérieur du globe (1) autour d'un axe de rotation (A1), perpendiculaire à la direction diamétrale (D) des moyens de liaison (5, 5a, 5b, 5c), un support (9), s'étendant à l'intérieur du globe (1) et portant l'axe de rotation (A1) du disque médian (7), des moyens d'éclairage (11), portés sur une face ou sur une face et une face opposée du disque médian (7) et un moyen (13) d'entraînement du disque médian (7), commandé en rotation par un moteur (15) porté par le support (9), le moyen d'entraînement (13) étant un moyen par engrenage, mobile autour d'un axe de rotation (A2) parallèle à l'axe de rotation (A1) du disque médian (7), **caractérisée en ce qu'**elle comprend un secteur de roue dentée (31) ou une roue dentée (37), fixé de façon coaxiale au disque médian (7), mobile autour de son axe de rotation (A1) et en prise par engrenage avec le moyen d'entraînement (13), mobile autour de son axe de rotation (A2).

2. Lampe selon la revendication 1, **caractérisée en ce que** l'axe de rotation (A2) du moyen d'entraînement (13) et le moteur (15) sont portés par une partie (9d) du support (9), opposée à une partie (9c), portant l'axe de rotation (A1) du disque médian (7) et dont un décrochement (27) permet de loger le moteur (15) dans un logement (28) fermé par une plaque (29) fixée au pied (3).

3. Lampe selon la revendication 1, **caractérisée en ce que** l'axe de rotation (A2) du moyen (13) d'entraînement et le moteur (15) sont portés par un levier (16) articulé au support (9) autour d'un axe de rotation (A3) parallèle à l'axe de rotation (A1) du disque médian (7).

4. Lampe selon la revendication 1, **caractérisée en ce que** l'axe de rotation (A2) du moyen d'entraînement (13) et le moteur (15) ainsi que l'axe de rotation (A1) du disque médian (7), sont portés par deux bras (9a, 9b) d'une partie du support (9), conformée en fourche.

5. Lampe selon la revendication 1, **caractérisée en ce que** l'axe de rotation (A2) du moyen (13) d'entraînement et le moteur (15) ainsi que l'axe de rotation (A1) du disque médian (7) sont portés par un deuxième bras (9f) du support (9), fixé à un premier bras (9e) du support (9), désaxé par rapport à la direction diamétrale (D).

6. Lampe selon la revendication 1, **caractérisée en ce que** le disque médian (7) comprend deux demi-disques lenticulaires convexes (7a, 7b) entre lesquels le support (9) s'étend en portant l'axe de rotation (A2) du moyen d'entraînement (13) et le moteur (15) ainsi que l'axe de rotation (A1) du disque médian (7).

7. Lampe selon la revendication 1, **caractérisée en ce que** le support (9) s'étend suivant la direction diamétrale (D) des moyens de liaison (5a, 5b) tandis que le disque médian (7) possède une échancrure (17) lui permettant d'être déplacé en rotation, de part et d'autre du support (9).

8. Lampe selon la revendication 1, **caractérisée en ce que** les moyens de liaison (5c) et le support (9) sont fixes l'un par rapport à l'autre et mobiles en rotation par rapport au pied (3), autour de la direction diamétrale (D).

## Patentansprüche

1. Lampe mit einem Globus (1), der über Verbindungsmittel (5), die sich entlang einer diametralen Richtung (D) des Globus (1) erstrecken, mit einem Fuß (3) verbunden ist, einer Mittelscheibe (7), die im Inneren des Globus (1) um eine Drehachse (A1) beweglich ist, welche senkrecht zur diametralen Richtung (D) der Verbindungsmittel (5, 5a, 5b, 5c) verläuft, einer Stütze (9), die sich im Inneren des Globus (1) erstreckt und die Drehachse (A1) der Mittelscheibe (7) stützt, Beleuchtungsmitteln (11), die auf einer Seite oder auf einer Seite und einer gegenüberliegenden Seite der Mittelscheibe (7) angeordnet sind, sowie einem Antriebsmittel (13) für die Mittelscheibe (7), das von einem an der Stütze (9) angeordneten Motor (15) drehend angetrieben wird, wobei das Antriebsmittel (13) ein Getriebemittel ist, das um eine zur Drehachse (A1) der Mittelscheibe (7) parallele Drehachse (A2) beweglich ist, **dadurch gekennzeichnet, dass** sie ein Zahnradsegment (31) oder ein Zahnrad (37) umfasst, das koaxial an der Mittelscheibe (7) befestigt, um deren Drehachse (A1) beweglich und im Eingriff mit dem um seine Drehachse (A2) beweglichen Antriebsmittel (13) ist.

2. Lampe nach Anspruch 1, **dadurch gekennzeichnet, dass** die Drehachse (A2) des Antriebsmittels (13) und der Motor (15) von einem Teil (9d) der Stütze (9) gestützt sind, die einem die Drehachse (A1) der Mittelscheibe (7) stützenden Teil (9c) gegenüberliegt und einen Absatz (27) aufweist, der es ermöglicht, den Motor (15) in einer Aufnahme (28) unterzubringen, die durch eine am Fuß (3) befestigte Platte (29) verschlossen ist.

3. Lampe nach Anspruch 1, **dadurch gekennzeichnet, dass** die Drehachse (A2) des Antriebsmittels (13) und der Motor (15) von einem Hebel (16) gestützt sind, der gelenkig mit der Stütze (9) um eine zur Drehachse (A1) der Mittelscheibe (7) parallele Drehachse (A3) verbunden ist.

4. Lampe nach Anspruch 1, **dadurch gekennzeichnet, dass** die Drehachse (A2) des Antriebsmittels (13) und der Motor (15) sowie die Drehachse (A1) der Mittelscheibe (7) von zwei Armen (9a, 9b) eines gabelförmig ausgebildeten Teils der Stütze (9) gestützt sind.

5. Lampe nach Anspruch 1, **dadurch gekennzeichnet, dass** die Drehachse (A2) des Antriebsmittels (13) und der Motor (15) sowie die Drehachse (A1) der Mittelscheibe (7) von einem zweiten Arm (9f) der Stütze (9) gestützt sind, der an einem ersten, zur diametralen Richtung (D) abgewinkelten Arm (9e) der Stütze (9) befestigt ist.

6. Lampe nach Anspruch 1, **dadurch gekennzeichnet, dass** die Mittelscheibe (7) zwei konvexe linsenförmige Halbscheiben (7a, 7b) umfasst, zwischen denen sich die Stütze (9) erstreckt und dabei die Drehachse (A2) des Antriebsmittels (13) und den Motor (15) sowie die Drehachse (A1) der Mittelscheibe (7) stützt.

7. Lampe nach Anspruch 1, **dadurch gekennzeichnet, dass** sich die Stütze (9) entlang der diametralen Richtung (D) der Verbindungsmittel (5a, 5b) erstreckt, während die Mittelscheibe (7) eine Ausnehmung (17) aufweist, die es ihr ermöglicht, beiderseits der Stütze(9) drehbar verstellt zu werden.

8. Lampe nach Anspruch 1, **dadurch gekennzeichnet, dass** die Verbindungsmittel (5c) und die Stütze(9) zueinander feststehend und gegenüber dem Fuß (3) um die diametrale Richtung (D) drehbar beweglich sind.

## Claims

1. A lamp comprising a globe (1), connected to a base (3) by connecting means (5) extending along a diametral direction (D) of the globe (1), a median disc (7), movable inside the globe (1) about an axis of rotation (A1), perpendicular to the diametral direction (D) of the connecting means (5, 5a, 5b, 5c), a support (9), extending inside the globe (1) and supporting the axis of rotation (A1) of the median disc (7), lighting means (11), disposed on one face or on one face and an opposite face of the median disc (7) and a drive means (13) for the median disc (7), driven in rotation by a motor (15) supported by the support (9), the drive means (13) being a gear means, movable about an axis of rotation (A2) parallel to the axis of rotation (A1) of the median disc (7), **characterised in that** it comprises a toothed wheel sector (31) or a toothed wheel (37), fixed coaxially to the median disc (7), movable about its axis of rotation (A1) and in gear engagement with the drive means (13), movable about its axis of rotation (A2).

2. A lamp according to claim 1, **characterised in that** the axis of rotation (A2) of the drive means (13) and the motor (15) are supported by a part (9d) of the support (9), opposite a part (9c) supporting the axis of rotation (A1) of the median disc (7) and having a step (27) allowing the motor (15) to be housed in a housing (28) closed by a plate (29) fixed to the base (3).

3. A lamp according to claim 1, **characterised in that** the axis of rotation (A2) of the drive means (13) and the motor (15) are supported by a lever (16) articulated to the support (9) about an axis of rotation (A3) parallel to the axis of rotation (A1) of the median disc (7).

4. A lamp according to claim 1, **characterised in that** the axis of rotation (A2) of the drive means (13) and the motor (15), as well as the axis of rotation (A1) of the median disc (7), are supported by two arms (9a, 9b) of a part of the support (9), shaped as a fork.

5. A lamp according to claim 1, **characterised in that** the axis of rotation (A2) of the drive means (13) and the motor (15), as well as the axis of rotation (A1) of the median disc (7), are supported by a second arm (9f) of the support (9), fixed to a first arm (9e) of the support (9), angled relative to the diametral direction (D).

6. A lamp according to claim 1, **characterised in that** the median disc (7) comprises two convex lenticular half-discs (7a, 7b) between which the support (9) extends, supporting the axis of rotation (A2) of the drive means (13) and the motor (15), as well as the axis of rotation (A1) of the median disc (7).

7. A lamp according to claim 1, **characterised in that** the support (9) extends along the diametral direction (D) of the connecting means (5a, 5b), while the median disc (7) has a notch (17) allowing it to be moved in rotation, on either side of the support (9).

8. A lamp according to claim 1, **characterised in that** the connecting means (5c) and the support (9) are fixed relative to one another and movable in rotation relative to the base (3), about the diametral direction (D).
